# EUROPÄISCHE PATENTANMELDUNG

(11) **EP 3 369 598 A1**
(43) Veröffentlichungstag der Anmeldung: **05.09.2018**
(21) Anmeldenummer: 18157069.8
(22) Anmeldetag: 16.02.2018
(51) Int. Cl.: B60K 6/36, B60K 6/387, B60K 6/40, B60K 6/442, B60K 6/547

(54) **ANTRIEBSEINRICHTUNG FÜR EIN KRAFTFAHRZEUG**

(30) Priorität: 01.03.2017 DE 102017203335
(71) Anmelder: AUDI AG, 85045 Ingolstadt (DE)
(72) Erfinder: Auerbach, Michael, 85049 Ingolstadt (DE); Brunner, Johannes, 86633 Neuburg an der Donau (DE); Weinzierl, Stefan, 85092 Kösching (DE)

(57) **Zusammenfassung**

Die Erfindung betrifft eine Antriebseinrichtung (1) für ein Kraftfahrzeug, mit einem ersten Antriebsaggregat (8), einem mittels einer Zwischenkupplung (11) mit dem ersten Antriebsaggregat (8) mit einem festen Übersetzungsverhältnis koppelbaren zweiten Antriebsaggregat (9) sowie einer mit dem ersten Antriebsaggregat (8) und dem zweiten Antriebsaggregat (9) jeweils koppelbaren Abtriebswelle (5). Dabei ist vorgesehen, dass das erste Antriebsaggregat (8) unmittelbar mit einem dritten Antriebsaggregat (10) gekoppelt oder koppelbar ist, und dass die Abtriebswelle (5) einerseits über eine erste Schaltkupplung (16) und eine erste Getriebestufe (14) und andererseits über eine parallel zu der ersten Schaltkupplung (16) mit dem zweiten Antriebsaggregat (9) gekoppelte zweite Schaltkupplung (17) und eine zweite Getriebestufe (15) mit dem zweiten Antriebsaggregat (9) koppelbar ist.

## Beschreibung

Die Erfindung betrifft eine Antriebseinrichtung für ein Kraftfahrzeug, mit einem ersten Antriebsaggregat, einem mittels einer Zwischenkupplung mit dem ersten Antriebsaggregat mit einem festen Übersetzungsverhältnis koppelbaren zweiten Antriebsaggregat sowie einer mit dem ersten Antriebsaggregat und dem zweiten Antriebsaggregat jeweils koppelbaren Abtriebswelle.

Die Antriebseinrichtung dient dem Antreiben des Kraftfahrzeugs, insoweit also dem Bereitstellen eines auf das Antreiben des Kraftfahrzeugs gerichteten Drehmoments. Das Drehmoment wird von der Antriebseinrichtung an der Abtriebswelle bereitgestellt, welche mit wenigstens einem angetriebenen beziehungsweise antreibbaren Rad des Kraftfahrzeugs gekoppelt ist. Die Wirkverbindung zwischen der Abtriebswelle und dem wenigstens einen Rad kann grundsätzlich starr und/oder permanent vorliegen oder lediglich temporär über eine Schaltkupplung. Vorzugsweise ist die Abtriebswelle mit einer Radachse des Kraftfahrzeugs beziehungsweise mehreren an dieser Radachse vorgesehenen Rädern gekoppelt, insbesondere über wenigstens ein Differentialgetriebe, besonders bevorzugt permanent.

Die Antriebseinrichtung verfügt über mehrere Antriebsaggregate, nämlich zumindest das erste Antriebsaggregat sowie das zweite Antriebsaggregat. Sowohl das erste Antriebsaggregat als auch das zweite Antriebsaggregat sind jeweils mit der Abtriebswelle koppelbar. Zudem ist zwischen dem ersten Antriebsaggregat und dem zweiten Antriebsaggregat die Zwischenkupplung vorgesehen, mittels welcher die beiden Antriebsaggregat miteinander koppelbar sind. In einer ersten Schaltstellung der Zwischenkupplung liegt insoweit eine Wirkverbindung zwischen dem ersten Antriebsaggregat und dem zweiten Antriebsaggregat vor, insbesondere sind das erste Antriebsaggregat und das zweite Antriebsaggregat starr miteinander gekoppelt. In einer zweiten Schaltstellung der Zwischenkupplung dagegen sind das erste Antriebsaggregat und das zweite Antriebsaggregat voneinander entkoppelt, insbesondere vollständig voneinander entkoppelt.

Bevorzugt ist die Abtriebswelle separat mit dem zweiten Antriebsaggregat koppelbar, wohingegen das Koppeln der Abtriebswelle mit dem ersten Antriebsaggregat ausschließlich gemeinsam mit dem zweiten Antriebsaggregat und/oder über das zweite Antriebsaggregat möglich ist. Insoweit ist die Abtriebswelle entweder mit dem zweiten Antriebsaggregat gekoppelt, wohingegen sie mit dem ersten Antriebsaggregat entkoppelt ist, oder sie ist sowohl mit dem ersten Antriebsaggregat als auch dem zweiten Antriebsaggregat gekoppelt. Das an der Abtriebswelle bereitgestellte Drehmoment wird also entweder allein von dem zweiten Antriebsaggregat oder sowohl von dem ersten Antriebsaggregat als auch von dem zweiten Antriebsaggregat gemeinsam bereitgestellt.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere mit geringem Aufwand eine flexible Nutzung ermöglicht.

Dies wird erfindungsgemäß mit einer Antriebseinrichtung mit den Merkmalen des Anspruchs 1 erreicht. Dabei ist vorgesehen, dass das erste Antriebsaggregat unmittelbar mit einem dritten Antriebsaggregat gekoppelt oder koppelbar ist, und dass die Abtriebswelle einerseits über eine erste Schaltkupplung und eine erste Getriebestufe und andererseits über eine parallel zu der ersten Schaltkupplung mit dem zweiten Antriebsaggregat gekoppelte zweite Schaltkupplung und eine zweite Getriebestufe mit dem zweiten Antriebsaggregat koppelbar ist.

Zusätzlich zu dem ersten Antriebsaggregat und dem zweiten Antriebsaggregat ist also das dritte Antriebsaggregat vorgesehen. Dieses ist unmittelbar mit dem ersten Antriebsaggregat gekoppelt, insbesondere starr und/oder permanent, oder zumindest koppelbar. In letzterem Fall ist zwischen dem ersten Antriebsaggregat und dem dritten Antriebsaggregat beispielsweise eine Kupplung, insbesondere eine Schaltkupplung, oder eine Überholkupplung angeordnet, sodass das erste Antriebsaggregat lediglich zeitweise mit dem dritten Antriebsaggregat gekoppelt ist. Das dritte Antriebsaggregat ist analog zu dem ersten Antriebsaggregat lediglich über das zweite Antriebsaggregat mit der Abtriebswelle koppelbar, vorzugsweise ausschließlich gemeinsam mit dem ersten Antriebsaggregat. Es ist also nicht vorgesehen, dass das dritte Antriebsaggregat separat von dem ersten Antriebsaggregat mit der Abtriebswelle gekoppelt werden kann.

Weiterhin ist es vorgesehen, dass das zweite Antriebsaggregat über mehrere Getriebestufen und Schaltkupplungen mit dem zweiten Antriebsaggregat gekoppelt werden kann beziehungsweise koppelbar ist. Unter den mehreren Getriebestufen sind zumindest die erste Getriebestufe und die zweite Getriebestufe zu verstehen, unter den mehreren Schaltkupplungen die erste Schaltkupplung und die zweite Schaltkupplung. Vorzugsweise ist die Wirkverbindung zwischen dem zweiten Antriebsaggregat und der Abtriebswelle ausschließlich über die erste Getriebestufe und die zweite Getriebestufe herstellbar. Neben diesen beiden Getriebestufen sind also keine weiteren Getriebestufen, insbesondere also keine parallel zu diesen Getriebestufen angeordnete Getriebestufe vorgesehen.

Die beiden Schaltkupplungen sind einerseits mit dem zweiten Antriebsaggregat und andererseits mit der Abtriebswelle gekoppelt, vorzugsweise jeweils starr und/oder permanent. Eine Eingangsseite der ersten Schaltkupplung sowie eine Eingangsseite der zweiten Schaltkupplung sind also mit dem zweiten Antriebsaggregat gekoppelt, nämlich vorzugsweise starr und/oder permanent. Eine Ausgangsseite der ersten Schaltkupplung ist mit der ersten Getriebestufe gekoppelt, welche wiederum auf ihrer der ersten Schaltkupplung abgewandten Seite mit der Abtriebswelle gekoppelt ist, wobei die jeweilige Kopplung vorzugsweise starr und/oder permanent ausgeführt ist. Dasselbe gilt für die zweite Schaltkupplung, deren Ausgangsseite über die zweite Getriebestufe mit der Abtriebswelle gekoppelt ist, nämlich bevorzugt ebenfalls starr und/oder permanent. In anderen Worten ist zwischen dem zweiten Antriebsaggregat und der Abtriebswelle ein Zweigangdoppelkupplungsgetriebe realisiert.

Die beiden Schaltkupplungen beziehungsweise ihre Eingangsseiten sind parallel zueinander mit dem zweiten Antriebsaggregat gekoppelt. Entsprechend kann die Wirkverbindung zwischen dem zweiten Antriebsaggregat und der Abtriebswelle wahlweise über entweder die erste Schaltkupplung und die erste Getriebestufe oder die zweite Schaltkupplung und die zweite Getriebestufe hergestellt sein. Die beiden Getriebestufen weisen hierbei voneinander unterschiedliche Übersetzungen auf. Selbstverständlich können die beiden Schaltkupplungen beide geöffnet sein, sodass die Wirkverbindung zwischen dem zweiten Antriebsaggregat und der Abtriebswelle unterbrochen ist.

Insgesamt zeigt sich, dass das erste Antriebsaggregat sowie das dritte Antriebsaggregat lediglich über die Zwischenkupplung mit den Schaltkupplungen beziehungsweise ihren Eingangsseiten koppelbar ist, vorzugsweise zusätzlich über das zweite Antriebsaggregat. Es kann jedoch auch vorgesehen sein, dass die Eingangsseiten beider Schaltkupplungen auf einer gemeinsamen Zwischenwelle vorliegen, an welcher einerseits die Zwischenkupplung und andererseits das zweite Antriebsaggregat angeordnet sind.

Mit einer derartigen Ausgestaltung der Antriebseinrichtung kann mit minimalem Aufwand, insbesondere hinsichtlich der notwendigen Bauteile, des Bauraums, der Kosten, des Gewichts und der Komplexität, ein flexibler Fahrbetrieb des Kraftfahrzeugs realisiert werden. Dies gilt insbesondere, falls das erste Antriebsaggregat als Brennkraftmaschine und das zweite Antriebsaggregat als elektrische Maschine ausgestaltet sind. Hierbei kann über einen weiten Geschwindigkeitsbereich hinweg einem Fahrer des Kraftfahrzeugs ein Fahrgefühl wie mit einem reinen Elektrofahrzeug vermittelt werden. Erst bei einer Fahrgeschwindigkeit oberhalb des Geschwindigkeitsbereichs muss ein Gangwechsel mithilfe der Schaltkupplungen vorgenommen werden. Auch kann der Entwicklungsaufwand für eine derartige Antriebseinrichtung gering gehalten werden, weil die beiden Schaltkupplungen aus bestehenden Doppelkupplungsgetrieben entnommen werden können.

Eine weitere Ausgestaltung der Erfindung sieht vor, dass das zweite Antriebsaggregat über eine Zahnradgetriebestufe mit einer gemeinsamen Getriebeeingangswelle der ersten Getriebestufe und der zweiten Getriebestufe gekoppelt ist. Die Getriebeeingangswelle stellt insoweit die Eingangswelle des Doppelkupplungsgetriebes dar. Das zweite Antriebsaggregat ist über die Zahnradgetriebestufe mit der Getriebeeingangswelle gekoppelt, vorzugsweise starr und/oder permanent. Die Zahnradgetriebestufe weist wenigstens zwei Zahnräder, insbesondere genau zwei Zahnräder auf, von welchen eines mit dem zweiten Antriebsaggregat und ein anderes mit der Getriebeeingangswelle gekoppelt ist, vorzugsweise starr und/oder permanent. Die Zahnräder sind beispielsweise als Stirnräder ausgeführt.

Eine weitere Ausführungsform der Erfindung sieht vor, dass die Abtriebswelle mit einer gemeinsamen Getriebeausgangswelle der ersten Getriebestufe und der zweiten Getriebestufe gekoppelt ist. Auch diese Kopplung ist bevorzugt starr und/oder permanent realisiert. Die Getriebeausgangswelle stellt die Ausgangswelle des Doppelkupplungsgetriebes dar. Jede der beiden Getriebestufen weist insoweit ein Zahnrad auf, welches auf der Getriebeausgangswelle angeordnet beziehungsweise mit ihr drehfest verbunden ist.

Eine bevorzugte Ausgestaltung der Erfindung sieht vor, dass die Abtriebswelle mit der Getriebeausgangswelle über eine weitere Zahnradgetriebestufe gekoppelt ist. Die weitere Zahnradgetriebestufe weist bevorzugt eine von eins verschiedene Übersetzung auf, sodass also während eines Betriebs der Antriebseinrichtung die Abtriebswelle eine Drehzahl aufweist, die von der Drehzahl der Getriebeausgangswelle verschieden ist. Die Kopplung der Abtriebswelle mit der Getriebeausgangswelle über die weitere Zahnradgetriebestufe ist bevorzugt starr und/oder permanent vorgesehen.

Eine Weiterbildung der Erfindung sieht vor, dass das erste Antriebsaggregat und die Zwischenkupplung oder die Zwischenkupplung und das zweite Antriebsaggregat über einen Schwingungsdämpfer miteinander verbunden sind. Der Schwingungsdämpfer dient der Dämpfung von Schwingungen des ersten Antriebsaggregats und/oder des dritten Antriebsaggregats. Der Schwingungsdämpfer weist bevorzugt ein Zweimassenschwungrad und/oder ein Fliehkraftpendel auf.

Im Rahmen einer bevorzugten Ausgestaltung der Erfindung ist vorgesehen, dass die Zwischenkupplung mit dem Schwingungsdämpfer integriert ausgestaltet ist. Mit einer derartigen integrierten Ausführungsform von Zwischenkupplung und Schwingungsdämpfer kann der Bauraumbedarf der Antriebseinrichtung weiter reduziert werden. Beispielsweise ist die Zwischenkupplung in radialer Richtung bezüglich einer Drehachse des Schwingungsdämpfers beziehungsweise der Zwischenkupplung innenseitig des Schwingungsdämpfers angeordnet, sodass also die Zwischenkupplung und der Schwingungsdämpfer in axialer Richtung gesehen überlappend angeordnet sind.

Eine bevorzugte weitere Ausgestaltung der Erfindung sieht vor, dass das zweite Antriebsaggregat eine Nennleistung derselben Größenordnung aufweist wie das erste Antriebsaggregat. Der Begriff der Größenordnung kann nach der üblichen mathematischen Definition ausgewertet werden. Alternativ ist unter derselben Größenordnung der Nennleistungen des ersten Antriebsaggregats und des zweiten Antriebsaggregats zu verstehen, dass die Nennleistung des zweiten Antriebsaggregats wenigstens 50 %, wenigstens 60 %, wenigstens 70 %, wenigstens 75 %, wenigstens 80 %, wenigstens 90 % oder wenigstens 95 % und/oder höchstens 105 %, höchstens 110 %, höchstens 120 %, höchstens 125 %, höchstens 130 %, höchstens 140 % oder höchstens 150 % der Nennleistung des ersten Antriebsaggregats aufweist. Alternativ kann die Nennleistung des zweiten Antriebsaggregats jedoch auch mehr als 150 % oder mehr als 200 % der Nennleistung des ersten Antriebsaggregats betragen. Von Bedeutung ist insbesondere, dass das zweite Antriebsaggregat eine bestimmte Mindestnennleistung aufweist, welche in derselben Größenordnung des ersten Antriebsaggregats liegt.

Eine bevorzugte weitere Ausführungsform der Erfindung sieht vor, dass das dritte Antriebsaggregat eine geringere Nennleistung aufweist als das zweite Antriebsaggregat. Das dritte Antriebsaggregat ist beispielsweise als elektrische Maschine ausgestaltet und kann als Starter für das erste Antriebsaggregat dienen. Insoweit ist die benötigte Nennleistung des dritten Antriebsaggregats geringer als die Nennleistung des zweiten Antriebsaggregats, sodass es kleiner beziehungsweise mit geringerer Nennleistung ausgestaltet sein kann.

Eine bevorzugte Ausführungsform der Erfindung sieht vor, dass das erste Antriebsaggregat als Brennkraftmaschine und/oder das zweite Antriebsaggregat und/oder das dritte Antriebsaggregat als elektrische Maschine ausgestaltet sind. Auf eine derartige Ausführungsform wurde vorstehend bereits hingewiesen. Grundsätzlich können die Antriebsaggregate beliebig ausgeführt sein. Besonders deutlich treten die Vorteile jedoch hervor, wenn das erste Antriebsaggregat als Brennkraftmaschine ausgestaltet ist und sowohl das zweite Antriebsaggregat als auch das dritte Antriebsaggregat jeweils als elektrische Maschine vorliegen.

Schließlich kann im Rahmen einer weiteren bevorzugten Ausführungsform der Erfindung vorgesehen sein, dass das erste Antriebsaggregat und/oder das zweite Antriebsaggregat und/oder das dritte Antriebsaggregat achsparallel oder koaxial zueinander angeordnet sind. In anderen Worten sind wenigstens zwei der Antriebsaggregate, welche das erste Antriebsaggregat, das zweite Antriebsaggregat und das dritte Antriebsaggregat umfassen, achsparallel oder koaxial zueinander angeordnet. Besonders bevorzugt gilt dies für alle der genannten Antriebsaggregate. Eine derartige Ausgestaltung ermöglicht eine besonders platzsparende Realisierung der Antriebseinrichtung.

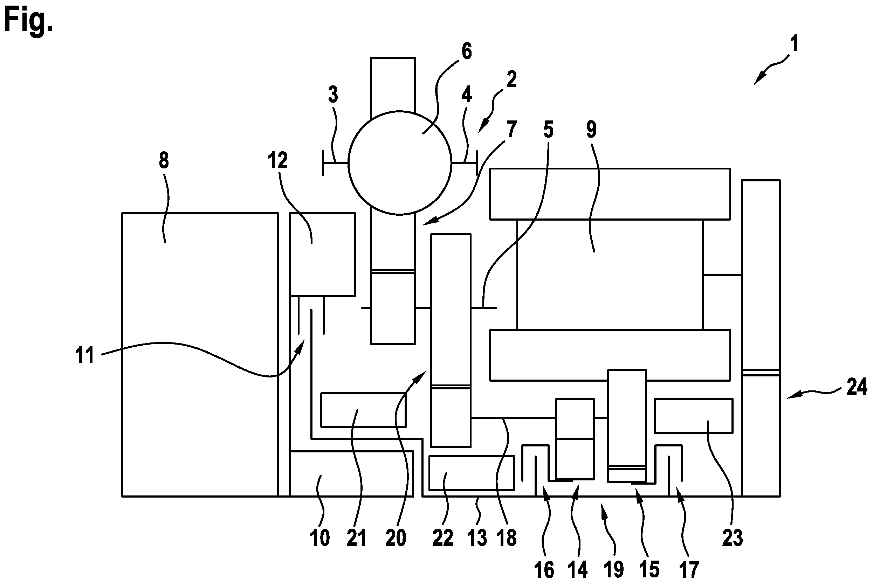

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug, welche über mehrere Antriebsaggregate verfügt.

Die Figur zeigt eine schematische Darstellung eines Bereichs einer Antriebseinrichtung 1, die zum Antreiben einer Radachse 2 eines nicht näher dargestellten Kraftfahrzeugs dient. Die Radachse 2 weist zwei Teilachsen 3 und 4 auf, die mit einer Abtriebswelle 5 der Antriebseinrichtung 1 gekoppelt ist, insbesondere starr und/oder permanent. Die Kopplung der Teilachsen 3 und 4 mit der Abtriebswelle 5 ist bevorzugt mittels eines Differentialgetriebes 6, nämlich eines Achsdifferentialgetriebes 6, realisiert. Beispielsweise ist das Differentialgetriebe 6 über wenigstens eine Getriebestufe 7 eingangsseitig mit der Abtriebswelle 5 gekoppelt, insbesondere starr und/oder permanent.

Zum Antreiben der Abtriebswelle 5 verfügt die Antriebseinrichtung 1 über ein erstes Antriebsaggregat 8, ein zweites Antriebsaggregat 9 sowie ein drittes Antriebsaggregat 10. Das Antriebsaggregat 8 ist in dem hier dargestellten Ausführungsbeispiel als Brennkraftmaschine ausgestaltet, wohingegen die Antriebsaggregate 9 und 10 als elektrische Maschinen vorliegen. Auch andere Ausgestaltungen der Antriebsaggregate 8, 9 und 10 können jedoch realisiert sein. Beispielsweise sind alle drei Antriebsaggregate 8, 9 und 10 als elektrische Maschinen ausgeführt. Das dritte Antriebsaggregat 10 ist zudem rein optional, kann also in einer Ausgestaltung der Antriebseinrichtung 1 entfallen.

Das erste Antriebsaggregat 8 und das zweite Antriebsaggregat 9 sind mittels einer Zwischenkupplung 11 miteinander koppelbar. In einer ersten Schaltstellung der Zwischenkupplung 11 ist insoweit eine Wirkverbindung zwischen dem ersten Antriebsaggregat und dem zweiten Antriebsaggregat 9 hergestellt, wohingegen sie in einer zweiten Schaltstellung unterbrochen ist. Es kann vorgesehen sein, dass das erste Antriebsaggregat 8 über einen Schwingungsdämpfer 12 mit der Zwischenkupplung 11 gekoppelt ist. Der Schwingungsdämpfer 12 ist beispielsweise als Zweimassenschwungrad ausgestaltet oder weist ein solches auf. Zusätzlich oder alternativ kann der Schwingungsdämpfer 12 über ein Fliehkraftpendel verfügen.

In dem hier dargestellten Ausführungsbeispiel ist die Zwischenkupplung 11 in dem Schwingungsdämpfer 12 integriert. Weiter ist in dem gezeigten Ausführungsbeispiel das dritte Antriebsaggregat 10 starr mit dem ersten Antriebsaggregat 8 gekoppelt, insbesondere permanent, oder zumindest starr koppelbar. Entsprechend ist das dritte Antriebsaggregat 10 auf der dem ersten Antriebsaggregat 8 zugewandten Seite des Schwingungsdämpfers 12 angeordnet. Daraus folgt, dass über den Schwingungsdämpfer 12 sowohl das erste Antriebsaggregat 8 als auch das dritte Antriebsaggregat 10 mit der Zwischenkupplung 11 beziehungsweise einer Eingangsseite der Zwischenkupplung 11 gekoppelt sind.

Auf einer Ausgangsseite der Zwischenkupplung 11 ist eine Getriebeeingangswelle 13 angeordnet. Bevorzugt ist die Getriebeeingangswelle 13 starr und/oder permanent mit der Ausgangswelle der Zwischenkopplung 11 gekoppelt. In anderen Worten können das erste Antriebsaggregat 8 und das (optionale) dritte Antriebsaggregat 10 mittels der Zwischenkupplung 11 mit der Getriebeeingangswelle 13 in Wirkverbindung gesetzt werden. Die Getriebeeingangswelle 13 liegt als gemeinsame Getriebeeingangswelle einer ersten Getriebestufe 14 und einer zweiten Getriebestufe 15 vor. Insbesondere sind Eingangsseiten einer ersten Schaltkupplung 16 und einer zweiten Schaltkupplung 17 jeweils mit der Getriebeeingangswelle 13 gekoppelt, nämlich bevorzugt starr und/oder permanent.

Ausgangsseitig ist die erste Schaltkupplung 16 mit der ersten Getriebestufe und die zweite Schaltkupplung 17 mit der zweiten Getriebestufe 15 gekoppelt, nämlich bevorzugt ebenfalls starr und/oder permanent. Auf ihrer jeweils der entsprechenden Schaltkupplung 16 beziehungsweise 17 abgewandten Seite sind die Getriebestufen 14 und 15 mit einer Getriebeausgangswelle 18 gekoppelt, insbesondere starr und/oder permanent. Die beiden Getriebestufen 14 und 15 sowie die beiden Schaltkupplungen 16 und 17 stellen insoweit zusammen mit der Getriebeeingangswelle 13 und der Getriebeausgangswelle 18 ein Doppelkupplungsgetriebe 19 dar. Die Getriebeausgangswelle 18 ist mit der Abtriebswelle 5 gekoppelt, vorzugsweise starr und/oder permanent, insbesondere über eine weitere Zahnradgetriebestufe 20.

Lediglich der Vollständigkeit halber soll darauf hingewiesen werden, dass die Zwischenkupplung 11 mittels eines ersten Aktuators 21, die erste Schaltkupplung 16 mittels eines zweiten Aktuators 22 sowie die zweite Schaltkupplung 17 mittels eines dritten Aktuators 23 betätigbar ist.

Der Darstellung ist deutlich zu entnehmen, dass das zweite Antriebsaggregat 9 ebenfalls mit der Getriebeeingangswelle 13 gekoppelt ist, nämlich vorzugsweise über eine Zahnradgetriebestufe 24. Die Übersetzung dieser Zahnradgetriebestufe 24 ist bevorzugt fest gewählt, also nicht veränderbar. Insgesamt wird deutlich, dass die Abtriebswelle 5 entweder mittels des zweiten Antriebsaggregats 9 antreibbar ist, während sie von dem ersten Antriebsaggregat 8 und dem dritten Antriebsaggregat 10 entkoppelt ist. Alternativ ist das Antreiben der Abtriebswelle 5 mittels des ersten Antriebsaggregats 8, des zweiten Antriebsaggregats 9 sowie des dritten Antriebsaggregats 10 gemeinsam möglich. Es kann, wie hier dargestellt, vorgesehen sein, dass die Antriebsaggregate 8, 9 und 10 achsparallel zueinander angeordnet sind. Dies macht eine besonders bauraumeffiziente Ausgestaltung der Antriebseinrichtung 1 möglich.

## Patentansprüche

1. Antriebseinrichtung (1) für ein Kraftfahrzeug, mit einem ersten Antriebsaggregat (8), einem mittels einer Zwischenkupplung (11) mit dem ersten Antriebsaggregat (8) mit einem festen Übersetzungsverhältnis koppelbaren zweiten Antriebsaggregat (9) sowie einer mit dem ersten Antriebsaggregat (8) und dem zweiten Antriebsaggregat (9) jeweils koppelbaren Abtriebswelle (5), **dadurch gekennzeichnet, dass** das erste Antriebsaggregat (8) unmittelbar mit einem dritten Antriebsaggregat (10) gekoppelt oder koppelbar ist, und dass die Abtriebswelle (5) einerseits über eine erste Schaltkupplung (16) und eine erste Getriebestufe (14) und andererseits über eine parallel zu der ersten Schaltkupplung (16) mit dem zweiten Antriebsaggregat (9) gekoppelte zweite Schaltkupplung (17) und eine zweite Getriebestufe (15) mit dem zweiten Antriebsaggregat (9) koppelbar ist.

2. Antriebseinrichtung nach Anspruch 1, **dadurch gekennzeichnet, dass** das zweite Antriebsaggregat (9) über eine Zahnradgetriebestufe (24) mit einer gemeinsamen Getriebeeingangswelle (13) der ersten Getriebestufe (14) und der zweiten Getriebestufe (15) gekoppelt ist.

3. Antriebseinrichtung nach einem der vorhergehenden Ansprüche, **dadurch gekennzeichnet, dass** die Abtriebswelle (5) mit einer gemeinsamen Getriebeausgangswelle (18) der ersten Getriebestufe (14) und der zweiten Getriebestufe (15) gekoppelt ist.

4. Antriebseinrichtung nach einem der vorhergehenden Ansprüche, **dadurch gekennzeichnet, dass** die Abtriebswelle (5) mit der Getriebeausgangswelle (18) über eine weitere Zahnradgetriebestufe (20) gekoppelt ist.

5. Antriebseinrichtung nach einem der vorhergehenden Ansprüche, **dadurch gekennzeichnet, dass** das erste Antriebsaggregat (8) und die Zwischenkupplung (11) oder die Zwischenkupplung (11) und das zweite Antriebsaggregat (9) über einen Schwingungsdämpfer (12) miteinander verbunden sind.

6. Antriebseinrichtung nach einem der vorhergehenden Ansprüche, **dadurch gekennzeichnet, dass** die Zwischenkupplung (11) mit dem Schwingungsdämpfer (12) integriert ausgestaltet ist.

7. Antriebseinrichtung nach einem der vorhergehenden Ansprüche, **dadurch gekennzeichnet, dass** das zweite Antriebsaggregat (9) eine Nennleistung derselben Größenordnung aufweist wie das erste Antriebsaggregat (8).

8. Antriebseinrichtung nach einem der vorhergehenden Ansprüche, **dadurch gekennzeichnet, dass** das dritte Antriebsaggregat (10) eine geringere Nennleistung aufweist als das zweite Antriebsaggregat (9).

9. Antriebseinrichtung nach einem der vorhergehenden Ansprüche, **dadurch gekennzeichnet, dass** das erste Antriebsaggregat (8) als Brennkraftmaschine und/oder das zweite Antriebsaggregat (9) und/oder das dritte Antriebsaggregat (10) als elektrische Maschine ausgestaltet sind.

10. Antriebseinrichtung nach einem der vorhergehenden Ansprüche, **dadurch gekennzeichnet, dass** das erste Antriebsaggregat (8) und/oder das zweite Antriebsaggregat (9) und/oder das dritte Antriebsaggregat (10) achsparallel oder koaxial zueinander angeordnet sind.

## Geänderte Patentansprüche

### Geänderte Patentansprüche gemäss Regel 137(2) EPÜ.

1. Antriebseinrichtung (1) für ein Kraftfahrzeug, mit einem ersten Antriebsaggregat (8), einem mittels einer Zwischenkupplung (11) mit dem ersten Antriebsaggregat (8) mit einem festen Übersetzungsverhältnis koppelbaren zweiten Antriebsaggregat (9) sowie einer mit dem ersten Antriebsaggregat (8) und dem zweiten Antriebsaggregat (9) jeweils koppelbaren Abtriebswelle (5), wobei das erste Antriebsaggregat (8) unmittelbar mit einem dritten Antriebsaggregat (10) gekoppelt oder koppelbar ist, und die Abtriebswelle (5) einerseits über eine erste Schaltkupplung (16) und eine erste Getriebestufe (14) und andererseits über eine parallel zu der ersten Schaltkupplung (16) mit dem zweiten Antriebsaggregat (9) gekoppelte zweite Schaltkupplung (17) und eine zweite Getriebestufe (15) mit dem zweiten Antriebsaggregat (9) koppelbar ist, wobei das erste Antriebsaggregat (8) und die Zwischenkupplung (11) oder die Zwischenkupplung (11) und das zweite Antriebsaggregat (9) über einen Schwingungsdämpfer (12) miteinander verbunden sind, **dadurch gekennzeichnet, dass** die Zwischenkupplung (11) mit dem Schwingungsdämpfer (12) integriert ausgestaltet ist, wobei die Zwischenkupplung (11) in radialer Richtung bezüglich einer Drehachse des Schwingungsdämpfers (12) beziehungsweise der Zwischenkupplung (11) innenseitig des Schwingungsdämpfers (12) angeordnet ist, sodass die Zwischenkupplung (11) und der Schwingungsdämpfer (12) in axialer Richtung gesehen überlappend angeordnet sind.

2. Antriebseinrichtung nach Anspruch 1, **dadurch gekennzeichnet, dass** das zweite Antriebsaggregat (9) über eine Zahnradgetriebestufe (24) mit einer gemeinsamen Getriebeeingangswelle (13) der ersten Getriebestufe (14) und der zweiten Getriebestufe (15) gekoppelt ist.

3. Antriebseinrichtung nach einem der vorhergehenden Ansprüche, **dadurch gekennzeichnet, dass** die Abtriebswelle (5) mit einer gemeinsamen Getriebeausgangswelle (18) der ersten Getriebestufe (14) und der zweiten Getriebestufe (15) gekoppelt ist.

4. Antriebseinrichtung nach einem der vorhergehenden Ansprüche, **dadurch gekennzeichnet, dass** die Abtriebswelle (5) mit der Getriebeausgangswelle (18) über eine weitere Zahnradgetriebestufe (20) gekoppelt ist.

5. Antriebseinrichtung nach einem der vorhergehenden Ansprüche, **dadurch gekennzeichnet, dass** das zweite Antriebsaggregat (9) eine Nennleistung derselben Größenordnung aufweist wie das erste Antriebsaggregat (8).

6. Antriebseinrichtung nach einem der vorhergehenden Ansprüche, **dadurch gekennzeichnet, dass** das dritte Antriebsaggregat (10) eine geringere Nennleistung aufweist als das zweite Antriebsaggregat (9).

7. Antriebseinrichtung nach einem der vorhergehenden Ansprüche, **dadurch gekennzeichnet, dass** das erste Antriebsaggregat (8) als Brennkraftmaschine und/oder das zweite Antriebsaggregat (9) und/oder das dritte Antriebsaggregat (10) als elektrische Maschine ausgestaltet sind.

8. Antriebseinrichtung nach einem der vorhergehenden Ansprüche, **dadurch gekennzeichnet, dass** das erste Antriebsaggregat (8) und/oder das zweite Antriebsaggregat (9) und/oder das dritte Antriebsaggregat (10) achsparallel oder koaxial zueinander angeordnet sind.
